# EUROPEAN PATENT APPLICATION

(11) **EP 0 745 648 A2**
(43) Date of publication of application: **04.12.1996**
(21) Application number: 96303885.6
(22) Date of filing: 30.05.1996
(51) Int. Cl.: C08L 83/04, B01F 17/54

(54) **Stable dispersible silicone compositions**

(30) Priority: 01.06.1995 US 456982
(71) Applicant: DOW CORNING CORPORATION, Midland Michigan 48686-0994 (US)
(72) Inventor: Christiano, Steven Patrick, Midland, Michigan 48642 (US); Tonge, Lauren Marie, Sanford, Michigan 48657 (US)
(74) Representative: Kyle, Diana

(57) **Abstract**

The present invention relates to silicone compositions for use in foaming systems which comprise a linear silicone antifoam agent, a particulate stabilizing aid and a nonaqueous liquid continuous phase. The claimed compositions have excellent emulsion and dispersion stability.

## Description

The present invention relates to a silicone composition for use in foaming systems. More particularly, a silicone composition is introduced comprising a linear silicone antifoam agent, a particulate stabilizing aid and a nonaqueous liquid continuous phase. The resultant silicone compositions have excellent emulsion and dispersion stability.

A defoamer or antifoam agent is a material which, when added in low concentration to a foaming liquid, controls a foam problem. A defoamer equilibrates the rate of foam collapse with the rate of foam formation. Such materials, in addition, remove unsightly and troublesome surface foam, improve filtration, watering, washing and drainage, of various types of suspensions, mixtures or slurries. Defoamers have found application traditionally in such areas as the pulp and paper industry, paints and latex, coating processes, fertilizers, textiles, fermentation processes, metal working, adhesive, caulk and polymer manufacture, the sugar beet industry, oil well cement, cleaning compounds, detergents, cooling towers and in chemical processes of varied description such as municipal or industrial primary and secondary waste water treatment systems.

It is essential for a defoamer to be inert and incapable of reacting with the product or system in which it is used. Additionally, it must have no adverse effect on the product or the system. A silicone antifoam agent is beneficial because it is chemically stable, rarely affects the treatment process and exhibits a relatively high antifoaming effect even in a minute amount.

The use of various silicone containing compositions as antifoams or defoamers is known. However, it is also well established that this art is highly unpredictable and slight modifications can greatly alter performance of such compositions. Most of these compositions contain silicone fluid (usually dimethylpolysiloxane), often in combination with small amount of silica filler.

Many silicone foam control agents are known to suppress foam. For example, hydrophobed silica/polydimethylsiloxane antifoams have been reviewed in DEFOAMING: Theory and Industrial Applications; Garrett, P.R., Ed.; Surfactant Science Series 45; Marcel Dekker: New York, 1993, especially pages 246-249.

Additionally, silicone antifoam agents have been known to include various surfactants and dispersing agents to impart improved foam control or stability to these compositions. General representatives of this art are US-As 4,076,648; 4,021,365; 4,005,044; 4,274,977; 3,784,479 and 3,984,347, disclosing foam control compositions which suggest that any polyglycol can be used as a continuous phase. However, we have found that, for some applications, solubility limitations can hamper the effective dispersion of silicone antifoam compounds. Therefore, careful selection of the continuous phase may provide improved dispersibility of the antifoam compound, thus obviating the need for many of the dispersion aids of the present art. Detergent compositions containing said suds controlling compositions are also described in the art, for example, EP-A 0 573 699.

No suggestion in any of the above art was made as to the stability of the antifoam after it was delivered to a highly concentrated surfactant media. Moreover, the inclusion of a silicone defoamer or antifoam agent in a liquid detergent is not new; however, it is uncommon. The reason is that it is particularly difficult to homogeneously disperse antifoam formulations into aqueous mediums such as liquid detergents.

The above methods of the art generally rely on the use of various surfactants and dispersing agents to impart improved foam control or stability to the compositions. In contrast, the compositions of our claimed invention have excellent emulsion stability and superior dispersion stability without the addition of a variety of surfactants and dispersing agents.

The present invention provides an easily dispersible silicone composition comprising a linear silicone antifoam agent, a particulate stabilizing aid and a nonaqueous liquid continuous phase. The compositions of this invention have excellent emulsion and dispersion stability and they provide highly effective foam control. This invention is further a silicone emulsion composition which is employed in an aqueous foaming media.

It is an object of this invention to produce compositions which offer a dramatic improvement in the stability of an antifoam agent against coalescence and aggregation in both the emulsion and the concentrated surfactant medium. In reducing aggregation, the present invention improves the uniformity of dispersion of the antifoam agent and provides more uniform and reproducible foam control delivery. After dispersion in an aqueous surfactant media, the formation of unsightly lumps of aggregated antifoam droplets during storage is further avoided. This aids stability and provides a far less visible form of the antifoam thereby allowing for the formulation of transparent liquids if needed.

The present invention also centers on our discovery that, by adjusting the amount of filler materials in the antifoam compound in combination with the amount of particulate stabilizing aids, there is a large improvement in stability due to less sedimentation. Further, certain types of particulate materials will greatly increase antifoam droplet stability against coalescence and aggregation during storage.

The present invention provides a silicone composition comprising (I) a linear silicone antifoam agent, (II) a particulate stabilizing aid and (III) a nonaqueous liquid continuous phase.

For purposes of the present invention, the term "linear" silicone antifoam agent denotes silicone antifoam agents which do not contain any intentional crosslinking or branching.

The compounds or compositions employed as linear silicone antifoam agent (I) herein are alkylated polysiloxane compounds of several types and can be used alone or in combination with various solid materials such as silica aerogels, xerogels or hydrophobic silicas of various types. In industrial practice, the term "silicone" has become a generic term which encompasses a variety of relatively high molecular weight polymers containing siloxane units and hydrocarbon groups of various types. In general terms, the linear silicone antifoam agent is a siloxane comprising units having the formula: 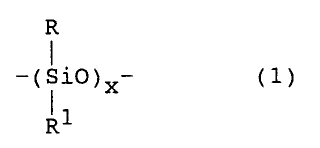 wherein x has a value ranging from 20 to 2,000 and R and R¹ are selected from alkyl or aryl groups. Preferred alkyl groups include methyl, ethyl, propyl and butyl. Preferred aryl groups include phenyl. Polydimethylsiloxanes (where R and R¹ are both methyl) having a number average molecular weight within the range of from 2,000 to 200,000 or higher, are useful antifoam agents in the present invention. Such silicone compounds are commercially available from Dow Corning Corporation under the trade name Dow Corning 200^{(R)} Fluid.

Additionally, other silicone compounds, wherein the side chain groups of R and R¹ are independently selected from the group consisting of alkyl, aryl or mixtures of alkyl and aryl groups, exhibit useful foam controlling properties. These compounds are readily prepared by the hydrolysis of the appropriate alkyl, aryl or mixtures of alkylaryl silicone dichlorides, with water in a manner well known in the art. Specific examples of linear silicone antifoam agents useful as (I) include dimethylpolysiloxanes, diethylpolysiloxanes, dipropylpolysiloxanes, dibutylpolysiloxanes, methylethylpolysiloxanes and phenylmethylpolysiloxanes. Dimethylpolysiloxanes are particularly useful herein due to their low cost and ready availability. The above polysiloxanes are generally triorganosiloxy-endblocked and preferably trimethylsiloxy-endblocked.

A second type of linear silicone antifoam agent useful as (I) comprises the combination of (i) silicone and (ii) silica and is prepared by admixing a silicone fluid of the type described hereinabove with a hydrophobic silica. Any of several known methods may be used for making a hydrophobic silica which is employed herein in combination with a silicone fluid as the antifoam agent. For example, a fumed silica is reacted with a trialkylchlorosilane (i.e., "silanated") to affix hydrophobic trialkylsilane groups on the surface of the silica. Silicas having organosilyl groups on the surface thereof are well known and are prepared in many ways such as by contacting the surface of a fumed or precipitated silica and/or silica aerogel, with (i) reactive silanes such as chlorosilanes or alkoxysilanes, (ii) with silanols or siloxanols or (iii) with silanes or siloxanes. Various grades of silica, having a particle size of several nanometers to several micrometers and a specific surface area of 500 to 50 m²/g, are commercially available. Further, several hydrophobic silicas having different surface treatments are also commercially available. It is preferred in this invention that the particle size of the silica employed should be not more that 100 nanometers and the specific surface area of the silica should exceed 50 m²/g.

Higher levels of silica than necessary for antifoaming efficacy may also be used in component (I) to increase its density to match the specific gravity of component (III) or the application liquid and to reduce the rate of settling of antifoam particles. This approach may be limited by the loss of antifoam efficacy due to overloading of the silicone antifoam compound. Another limiting factor in this approach is that the addition of large amounts of these materials will increase the viscosity of component (I) and may hinder processing, emulsification and/or performance of the antifoam.

The linear silicone antifoam agent (I) may also be any of the linear silicone antifoam agents known in the art including those taught in US-As 3,383,327; 3,455,839; 4,012,334; 4,145,308; 4,443,357; 4,486,336 and 4,919,843. In the above patents, the silica present in the antifoam compounds/compositions is hydrophobed in-situ. This list is not intended as a restriction on the type of linear silicone antifoam agents which can be employed in our foam control compositions but is disclosed to exemplify the silicone antifoam agents suitable for use therein.

Those skilled in the art are also directed to DEFOAMING: Theory and Industrial Applications; Garrett, P.R., Ed.; Surfactant Science Series 45; Marcel Dekker: New York, 1993, especially pages 246-249 which teaches a variety of hydrophobed silica/polydimethylsiloxane antifoam agents that are also suitable as linear silicone antifoam agents for component (I).

Component (II) of the claimed invention is a hydrophobic particulate stabilizing aid wherein the particulate is fine particle sized silica. Typically component (II) of our invention is silica and it is of the fumed or precipitated types, having a B.E.T. surface area preferably from 50 to 500 square meters per gram, the surface of which has been treated with hydrophobing agents.

In the case of a hydrophilic silica, it is possible to hydrophobize only a portion of the surface, for example, by treating some fraction of the hydrophilic surface groups. For a more fully hydrophobized silica, such a partially hydrophobized silica could be regarded as hydrophilic. However, if it is compared with a completely untreated hydrophilic silica, it is regarded as hydrophobic.

The untreated hydroxyls are hydrophilic and capable of hydrogen bonding with polar substances such as water. The alkylated portion of the surface is non-polar in nature and hydrophobic. A controlled level of treatment will provide a moderately treated silica with a balance between the hydrophobic alkylated surface and the hydrophilic untreated surface. Particulates having a controlled level of hydrophobic treatment prior to utilization are preferred as component (II) in the present invention.

Any of the known treating methods may be employed in the prior treatment of silica for component (II). For example, fumed silica can be treated with dimethyldichlorosilane to affix dimethylsilane groups on the surface of the silica. The hydrophobing agents herein are any of those known to the art which provide organosilyl reaction products bound to the silica surface. Common examples of hydrophobing agents are silanes, siloxanes or silazanes. Many hydrophobic silicas are commercially available. Thus, modification is performed by procedures well known in the art, for example, by reaction of the silica surface with trialkylchlorosilane, dialkyldichlorosilane, octaalkylcyclotetrasiloxane, hexaalkyldisilazane and hexaalkyltrisilazane under suitable conditions.

One important indicator of the hydrophobing treatment level is determined by using the Methanol Wettability Test. This is a standard test known in the industry which measures the volume percent of methanol in water which is needed to just wet the silica. Silicas that are wettable by solutions containing less methanol are more hydrophilic; those requiring more methanol are more hydrophobic.

For example, one embodiment of component (II) that has shown particular utility in the present invention is Aerosil® R 972 (fumed silica that has been treated to a moderate level with dichlorodimethylsilane, having 110 m²/g BET surface area, Degussa Corporation, Ridgefield Park, N.J.). This material is prepared from a fumed silica having surface area of 130 m²/g. The silica is treated with dimethyldichlorosilane at 500°C. with the treatment level controlled to provide less than complete methylation of the surface. For Aerosil® R972, it is estimated that 70% of the surface hydroxyl groups present on the original silica have been methylated leaving approximately 30% untreated. Thus, this silica has a 70/30 or a 2.33 treated/untreated silanol ratio. Aerosil® R972 has a methanol wettability of 40%.

For the compositions of the present invention, it is preferred that the stabilizing aid of component (II) be a silica whose surface has been hydrophobically modified to provide a surface composition having a treated/untreated surface silanol ratio such that it has a Methanol Wettability of at least 20 percent. It is highly preferred that our component (II) have a Methanol Wettability of from 30 to 80 percent.

Other characteristics of the silica of component (II) are hypothesized to have influencing factors on their relative utility as stabilizing aids. Without limiting the present invention to any particular theory, it is believed that the physical and chemical makeup of the solid's surface is important to the utility of the particulates in the present invention in that it controls the wetting behavior of the solid. Thus, in addition to having a controlled level of surface treatment, the uniformity of distribution of the hydrophobic materials on the surface, the surface roughness and the porosity of the solid is thought to impact wetting behavior, especially wetting hysteresis.

An effective amount of our stabilizing aid is required for the compositions of the present invention to display beneficial effects in the claimed silicone compositions. It is preferable that 0.1 to 250 parts by weight of particulate stabilizing aid (II) be used per 100 parts by weight of linear silicone antifoam agent (I). It is highly preferred that 0.3 to 125 parts of (II) be used per 100 parts of (I).

The amount of particulate stabilizing aid (II) needed for emulsion stability may vary based on the characteristics of component (I) and component (III), including their respective specific gravities. The amount or type of particulate stabilizing aid may also depend on the final application; for example, dispersion stability in an aqueous foaming media or suspension in a concentrated surfactant media may require a different amount or kind of particulate stabilizing aid than that needed for only emulsion stability. These amounts and types of particulate stabilizing aid may be readily determined by routine experimentation.

The nonaqueous liquid continuous phase (III) of the present invention is designed to be a distinct phase and its character is restricted to liquids which are essentially immiscible with the particular linear silicone antifoam (I). As used herein, "immiscible" implies substances of the same phase that cannot be uniformly mixed or blended together homogeneously. The nonaqueous liquid continuous phase of component (III) is selected from the group consisting of ethylene glycol, propylene glycol, polypropylene glycol, polyethylene glycol, copolymers of ethylene and propylene glycols, condensates of polypropylene glycol with polyols, condensates of polyethylene glycol with polyols and condensates of copolymers of ethylene and propylene glycols with polyols.

The nonaqueous phase may be selected for ease of dispersibility and solubility in aqueous foaming media. It may also be selected for ease of dispersibility and solubility in the liquid surfactant medium since insufficient solubility can lead to poor stability and poor performance of the antifoam in the concentrated liquid surfactant medium. The nonaqueous continuous phase may also be selected for any known benefit to antifoaming behavior.

The liquids are further selected based on their specific gravity with a close match relative to the stabilized antifoam particles being preferable. Preferably, component (III) has a viscosity below 10,000 mm²/s at 25°C. A closer match of the continuous phase specific gravity to the stabilized antifoam droplets may be obtained by judiciously selecting and blending two or more nonaqueous liquids to make component (III). It is preferable that 25 to 9900 parts by weight of liquid continuous phase (III) be used per 100 parts by weight of linear silicone antifoam agent (I). It is highly preferred that 100 to 900 parts of (III) be used per 100 parts of (I).

The compositions of the present invention may additionally comprise (IV) water. Water may only be present when it is fully miscible in the continuous phase, component (III). Generally, from 1 to 150 parts by weight of water are present for each 100 parts by weight of component (III).

The compositions of the present invention may also comprise (V) at least one anionic surfactant. A nonionic surfactant may also be employed to aid in dispersion stability when the silicone composition of the invention is for example diluted to low concentration in water. Due to the hydrophobic nature of the antifoam droplet surface, the droplets will aggregate in water without a surfactant present. It is preferred that this surfactant is a nonionic silicone surfactant when the compositions of the present invention are diluted in concentrated surfactant media. The nonionic silicone surfactant is preferably a material including a trimethylsilyl endcapped polysilicate which has been condensed with a polyalkylene glycol or diester or a block copolymer of polydimethylsiloxane and polyalkylene oxide. These surfactants are well known in the art and are exemplified by the "dispersing agents" disclosed by US-As 3,784,479 and 3,984,347. In some instances, the surfactants may best be processed from a solvent such as a polyalkylene glycol or copolymers thereof, cyclic silicones or an organic solvent such as xylene.

A sufficient quantity of at least one anionic surfactant may be employed to aid emulsification or to control particle size of linear silicone antifoam component (I) in the nonaqueous liquid continuous phase of component (III). Types of surfactants include anionic surfactants such as salts of alkylsulfates, salts of alkylarylsulfates, salts of alkyl ether sulfates, salts of alkylaryl ether sulfates, salts of alkyl sulfonates and salts of alkylaryl sulfonates, nonionic surfactants such as alcohol alkoxylates, alkylphenol alkoxylates, glyceryl esters, polyoxyethylene esters, anhydrosorbitol esters, natural fats, oils, waxes, alkoxylated and glycol esters of fatty acids, diethanolamine condensates, monoalkanolamine condensates and polyoxyethylene fatty acid amides, amphoteric surfactants such as N,N-dimethyl-N-alkyl-N-carboxymethylammonium betaines, N,N-dialkylaminoalkylene carboxylates, N,N,N-trialkyl-N-sulfoalkyleneammonium betaines, N,N-dialkyl-N,N-bispolyoxyethyleneammonium sulfate betaines and 2-alkyl-1-carboxymethyl-1-hydroxyethyl-imidazolinium betaines. This list is intended to be illustrative and is not restrictive as to the types of suitable surfactants. Many other surfactants known to those skilled in the art may be used.

Generally, from 1 to 40 parts by weight of surfactant is used for each 100 parts by weight of component (I).

In addition to the above mentioned components, the foam control compositions of this invention may also contain adjuvants such as corrosion inhibitors, dyes, nonreinforcing inorganic fillers, such as microcystalline quartz, microcrystalline novaculite, calcium carbonate, antimony oxides, wollastonite, titanium oxides, diatomaceous earth, clays, zinc oxides and barium sulfate in treated forms or treated in situ.

The compositions of the present invention are prepared by homogeneously mixing components (I), (II) and (III) and any optional components, using any suitable mixing means such as a spatula, mechanical stirrers, in-line mixing systems containing baffles, blades or any other mixing surface including powered in-line mixers or homogenizers, a drum roller, a three-roll mill, a sigma blade mixer, a bread dough mixer and a two roll mill.

The order of mixing components (I) to (III) is not critical; however, it is highly preferred that components (I) and (II) not be premixed together. After component (I) and nonaqueous liquid continuous phase (III) are mixed, component (II) is combined with the mixture of components (I) and (III) to form an emulsion and to form a composition of the present invention. The particulate stabilizing aid (II) may be combined with the mixture of (I) and (III) either as a dry powder or as a premix in a portion of component (III).

Another method for preparing the compositions of this invention involves mixing components (II) and (III) together and next combining component (I) with the mixture formed by (II) and (III). It is preferred that the stabilizing aid component (II) not be mixed into the silicone antifoam component (I) directly as this may cause the stabilizing aid to be fully wetted by component (I) and thus reduce the effectiveness of the compositions of our invention.

Optional component (IV) may be added to component (III) or to the final composition of (I), (II) and (III). Optional component (V) may be added separately to component (I), (II) or (III) or to the final composition of (I), (II) and (III).

The compositions of the present invention can be used as any kind of foam control agent, i.e., as defoaming agents and/or antifoam agents. Defoaming agents are generally considered as foam reducers whereas antifoam agents are generally considered as foam preventors. The compositions of this invention find utility as foam control compositions in various media or foamable liquids. For example, our compositions may be used in inks, coatings, paints or lubricants; in the treatment of industrial waste waters, in paper manufacture including treatments of black liquors; in paper recycling; in fermentation including ethanol or antibiotic production; in cleaning and dying of textiles; and in detergents (i.e., compositions which contain surfactants with or without builders such as liquid detergents, heavy duty liquid detergents or their combined solutions). Through judicious selection of components, the claimed compositions also have utility in food processing or in antacids.

Silicone compositions made by the present invention were prepared and tested to demonstrate their defoaming capabilities and to determine their stability and performance.

These compositions were tested as emulsions, in aqueous foaming media and in concentrated surfactant media. Concentrated surfactant media, for example, liquid detergents and/or textile scours, are made up of a combination of ingredients such as those described in Surfactants in Consumer Products, Theory, Technology and Application, J. Falbe, Springer-Verlag, Heidelberg, 1987 and in Detergents and Textile Washing, G. Jakobi and A Lohr, VCH, New York, NY, 1987. They include anionic, nonionic, amphoteric surfactants or combinations thereof and water. Liquid detergent compositions contain a variety of optional ingredients such as fatty acid soaps, builder-buffers such as sodium citrate, sodium tripolyphosphate and organic amine neutralizing agents; surfactant solubilizing agents including solvents such as propylene glycol, ethanol or other alcohols and water, hydrotropes such as sulfonates of aromatic or polyaromatic organic compounds; and other ingredients: such as enzymes, enzyme stabilizers, soil suspending agents, optical brighteners, perfumes, dyes, opacifiers and fragrances. This listing is not meant to be complete in any way, nor is it limiting, but is meant to generally describe the area of common knowledge for those skilled in the art.

In the examples, the compositions of the present invention and the comparative compositions were tested for several forms of stability including: coalescence, aggregation and phase stability. "Coalescence" is the merging of smaller antifoam droplets into a single larger drop. "Aggregation" denotes the collection of individual antifoam droplets into flocculates or clumps that are visible by the human eye and are suspended in the body of the liquid. "Phase stability" relates to movement of the antifoam droplets (up or down) within the emulsion or once dispersed in an aqueous foaming medium or concentrated surfactant media, i.e., creaming or sedimentation of the antifoam droplets.

The particulate stabilizing aids below were characterized using a Methanol Wettability Test (Determination of the Methanol Wettability of Hydrophobic Fumed Silicas by the Multipoint Method, Method Number ACM-125 from Degussa Corporation, Ridgefield Park, N.J.) in which the silica samples were shaken in a series of solutions of increasing methanol content. The solution of methanol-water at which the silica was fully wetted was determined following centrifugation of the sample for 5 minutes at 2500 RPM with a 14.6 cm (5.75 inch) radius rotor. Plotting of the sediment height as a percent of the sediment height at complete wetting provides a multipoint approach.

All parts and percentages in the examples are on a weight basis and all measurements were made at 25°C. unless indicated to the contrary. The viscosities listed herein are kinematic viscosities where for example, 1 mm²/s = 1 x 10⁻⁶ m²/s = 1 centistoke.

The following materials, listed for ease of reference, were employed in the preparation of the following silicone compositions:

### Component I: Linear Silicone Antifoam agent (SA):

SA1 was a trimethylsilyl endblocked polydimethylsiloxane having a viscosity of 500 mm²/s.

SA2 was a trimethylsilyl endblocked polydimethylsiloxane having a viscosity of 1000 mm²/s.

SA3 was a trimethylsilyl endblocked polydimethylsiloxane having a viscosity of 5000 mm²/s.

SA4 was a blend of 95 parts of a trimethylsilyl endblocked polydimethylsiloxane having a viscosity of 1000 mm²/s and 5 parts of CAB-O-SIL® TS720 which is a hydrophobic silica from Cabot Corporation (Tuscola, IL).

SA5 was a blend of 95 parts of a trimethylsilyl endblocked polydimethylsiloxane having a viscosity of 12,500 mm²/s and 5 parts of SIPERNAT® D13 which is a hydrophobic silica from Degussa Corporation (Ridgefield Park, NJ).

SA6 was prepared according to US-A 3,383,327 by mixing 91 parts of trimethylsilyl endblocked polydimethylsiloxane having a viscosity of 500 mm²/s, 3 parts of hydroxylated polydimethylsiloxane having a viscosity of 40 mm²/s and 3 parts of a silica aerogel having a B.E.T. surface area of 310 m²/g.

SA7 was prepared by mixing 88.8 parts of trimethylsilyl endblocked polydimethylsiloxane having a viscosity of 12,500 mm²/s, 8.8 parts of precipitated silica having a B.E.T. surface area of 310 m²/g and 2.4 parts of activated hexamethyldisilazane.

SA8 was prepared by mixing 88.3 parts of trimethylsilyl endblocked polydimethylsiloxane having a viscosity of 1000 mm²/s, 2.2 parts of a resin and 9.5 parts of precipitated silica prepared by US-A 3,445,839.

### Component II: Particulate Stabilizing Aids (PS):

PS1 was SIPERNAT® D11, a precipitated silica that had been treated with a polydimethylsiloxane, having 90 m²/g BET surface area and having a methanol wettability of 80%.

PS2 was SIPERNAT® D12, a precipitated silica that had been treated to a moderate level with a polydimethylsiloxane, having 80 m²/g BET surface area and having a methanol wettability of 80%.

PS3 was SIPERNAT® D13, a precipitated silica that had been treated to a moderate level with a polydimethylsiloxane, having 110 m²/g BET surface area and having a methanol wettability of 80%. SIPERNAT® D11, D12 and D13 are commercially available from Degussa Corporation (Ridgefield Park, NJ).

PS4 was AEROSIL® R972, a fumed silica that had been treated to a moderate level with dichlorodimethylsilane, having 110 m²/g BET surface area and having a methanol wettability of 40%.

PS5 was AEROSIL® R974 a fumed silica that had been treated to a moderate level with dichlorodimethylsilane, having 170 m²/g BET surface area and having a methanol wettability of 35%.

PS6 was AEROSIL® R976, a fumed silica that had been treated to a moderate level with dichlorodimethylsilane, having 250 m²/g BET surface area and having a methanol wettability of 30%. AEROSIL® R972, 974 and 976 are commercially available from Degussa Corporation (Ridgefield Park, NJ).

PS7 was CAB-O-SIL® TS530, a fumed silica that had been treated to a moderate level with hexamethyldisilazane, having 200 m²/g BET surface area and having a methanol wettability of 70%.

PS8 was CAB-O-SIL® TS610, a fumed silica that had been treated to a moderate level with dichlorodimethylsilane, having 120 m²/g BET surface area and having a methanol wettability of 40%. CAB-O-SIL® TS530 and TS610 are commercially available hydrophobic fumed silicas from Cabot Corporation (Tuscola, IL).

### Component III: CONTINUOUS PHASES (CP):

CP1 was EP530™ a polyethylene oxide-polypropylene oxide copolymer having a number average molecular weight of 2000 from Dow Chemical Company (Midland, Michigan).

CP2 was P15-200®, ethylene oxide/propylene oxide triol copolymers with glycerin having a number average molecular weight of 2,600 from Dow Chemical Company (Midland, Michigan).

CP3 was P4000™, a polypropylene glycol of 4000 number average molecular weight from Dow Chemical Company (Midland, Michigan).

CP4 was an allyl-ended, acetoxy-capped polyglycol copolymer which had 50:50 mole percent polyoxyethylene and polyoxypropylene and had a number average molecular weight of 1936.

CP5 was UCON® 50HB660 and CP6 was UCON® 50HB5100, which are alcohol started polymers containing equal amounts by weight of oxyethylene and oxypropylene groups from Union Carbide Chemicals (Danbury, CT).

### Example 1

The following silicone compositions, Samples 1 to 9, were prepared by mixing together 17.5 parts by weight of component (II), composed of the particulate stabilizing aid and 402.5 parts by weight of component (III), composed of the continuous phase with moderate mechanical stirring until the suspension was uniform. To this mixture, 280 parts of component (I), the linear silicone antifoam agent, were added with moderate stirring. The mixture was then homogenized using a mixer-homogenizer for 30 minutes, with a cooling period, followed by another 30 minutes of homogenization. The compositions of each sample are listed in Table I.

In order to test the stability against coalescence and aggregation of the emulsion samples, the particle size (PS) of each emulsion was reported initially after preparation and then after the emulsion was allowed to stand at 25°C. for seven months. The sample ratios were not set for phase stability, therefore the samples were hand mixed prior to sampling. The PS results are also shown in Table I. PS measurements were performed using a Malvern™ laser light scattering instrument fitted with a 300 mm lens. The samples were diluted 1:20 into P425™ which is a glycol (from Dow Chemical, Midland, Michigan) and then diluted into water in the sample cell to provide an obscuration value in the correct range. The PS results are calculated to give distribution on a volume average basis. The distribution is described using the median particle diameter, D(v0.5), which represents the PS for which 50% of the volume is in smaller particles. Similarly, D(v0.9), the particle size which is larger than 90% of the distribution, is also reported in Table I.

**TABLE I**

| Sample | 1 | 2 | 3 | 4 | 5 | 6 | 7 | 8 | 9 |
|---|---|---|---|---|---|---|---|---|---|
| Component I | SA5 | SA5 | SA6 | SA6 | SA7 | SA7 | SA7 | SA8 | SA8 |
| Component II | PS4 | PS6 | PS2 | PS3 | PS4 | PS5 | PS6 | PS4 | PS6 |
| Component III | CP2 | CP2 | CP2 | CP2 | CP2 | CP2 | CP2 | CP2 | CP2 |
| Initial D(v0.9) | 138 | 41 | 399 | 168 | 212 | 180 | 283 | 78 | 27 |
| Initial D(v0.5) | 85 | 25 | 89 | 84 | 123 | 94 | 106 | 37 | 15 |
| Later D(v0.9) | 127 | 105 | 416 | 103 | 194 | 236 | 175 | 60 | 28 |
| Later D(v0.5) | 75 | 54 | 57 | 57 | 120 | 97 | 74 | 20 | 14 |

Several comparative silicone antifoaming agent compositions, the Comparative Samples (CS) 1, 2, 3 and 4 were prepared by separately mixing 280 parts of component (I) (SA5 for CS1, SA6 for CS2, SA7 for CS3 and SA8 for CS4 respectively) with 402.5 parts of component (III), CP2, without component (II) present. Each of these comparative samples were not stable and required constant mixing to keep component (I) even roughly dispersed in component (III).

### Example 2

Silicone compositions, Samples 10 and 11, were prepared in the same manner as Example 1, except that 280 parts of SA7, 35 parts of PS4 and 385 parts of CP2 were used to prepare Sample 10 and 280 parts of SA7, 52.5 parts of PS4 and 367.5 parts of CP2 were used to prepare Sample 11. These samples were again stable against aggregation, coalescence and phase separation.

Samples 10 and 11, along with Samples 1 to 9 from Example 1 were tested for their antifoam performance. Each of the samples was diluted in accordance with the following recipe: 0.63 g of each of the silicone compositions prepared in Samples 1-11 were added to 49.37 g of a 1 wt% solution of Triton™ X-100 to make a dilution of 5000 ppm of component (I) (the first dilution was done in a surfactant solution since dilution in only water caused aggregation); 1 g of this first dilution was then added to 99 g of a 1 wt % solution of Triton™ X-100 in a 236.6 ml (8 oz) square bottle to make a foaming composition with a total of 50 ppm of component (I).

The foaming composition was shaken for 10 seconds by a Burrell™ wrist action shaker. The time t (seconds) between the discontinuance of shaking and the drop in foam to 5 mm was measured. If the foam had not collapsed to 5 mm within 120 seconds, then the foam height h (millimeters) was measured above the 5 mm line and recorded. The bottle was shaken again for 40 seconds and the time or height were likewise measured. The test was further continued by increasing the shaking time to 60, 120 and 600 seconds. The results are shown in Table II. The results are given in seconds except where millimeters (mm) are indicated. The control contained no silicone composition and consisted only of 100g of the 1 wt% Triton™ X-100 solution.

**Table II**

| Sample | Shake Test Times | | | | |
|---|---|---|---|---|---|
| | 10 sec | 40 sec | 60 sec | 120 sec | 600 sec |
| 1 | 12 | 24 | 33 | 38 | 50 |
| 2 | 5 | 11 | 19 | 33 | 55 |
| 3 | 5 | 8 | 11 | 20 | 35 |
| 4 | 4 | 5 | 8 | 12 | 34 |
| 5 | 5mm | 57 | 98 | 57 | 49 |
| 6 | 48 | 89 | 45 | 30 | 30 |
| 7 | 105 | 96 | 67 | 46 | 37 |
| 8 | 5mm | 10mm | 10mm | 5mm | 57 |
| 9 | 5mm | 5mm | 5mm | 5mm | 36 |
| 10 | 10mm | 10mm | 10mm | 5mm | 75 |
| 11 | 5mm | 5mm | 5mm | 81 | 46 |
| control | 35mm | 55mm | 55mm | 60mm | 65mm |

### Example 3

Samples 1 to 11 were further tested for their antifoaming performance in a higher shear blender test. Each of the samples were diluted in accordance with the following recipe: 0.63 g of the silicone compositions of Samples 1-11 were added to 49.37 g of a 2 wt% surfactant solution of a 50:50 solution of linear alkylbenzene sulfonate and Neodol™ 23-9; 2 g of this dilution were then added to 200ml of this same surfactant solution in a blender to make a foaming composition with a total of 50 ppm of component (I). The foaming composition was blended for 30 seconds. The initial foam height H (millimeters) was measured and recorded. The blender was then allowed to stand for 5 minutes and the foam height h was measured again and recorded. The blender was then run again for 60 seconds and foam heights were likewise measured. The results are shown in Table III in millimeters. The control contained no silicone composition and consisted only of 200 ml of the surfactant solution.

**Table III**

| Sample | Blender Test Times | | | |
|---|---|---|---|---|
| | 30 sec Blend | | 60 sec Blend | |
| | H=initial | h=5 min | H=initial | h=5 min |
| 1 | 77 | 22 | 92 | 87 |
| 2 | 82 | 35 | 93 | 85 |
| 3 | 79 | 65 | 83 | 72 |
| 4 | 76 | 64 | 85 | 77 |
| 5 | 100 | 40 | 95 | 25 |
| 6 | 87 | 27 | 87 | 23 |
| 7 | 92 | 27 | 85 | 25 |
| 8 | 93 | 64 | 85 | 61 |
| 9 | 90 | 65 | 87 | 60 |
| 10 | 100 | 34 | 93 | 27 |
| 11 | 106 | 64 | 106 | 53 |
| control | 114 | 106 | 120 | 109 |

### Example 4

Samples 1 and 2, which were made with SA5; samples 3 and 4, which were made with SA6; samples 5, 6, 7, 10 and 11, which were made with SA7; samples 8 and 9, which were made with SA8; and the Comparative Samples CS1, CS2, CS3 and CS4 prepared in Example 1, were tested for stability in a concentrated surfactant medium. Dawn® dishwashing detergent manufactured by The Procter & Gamble Company, Cincinnati, Ohio, was used as the concentrated surfactant solution. This type of detergent typically includes the following ingredients: cleaning and sudsing agents (anionic, nonionic and amphoteric surfactants), dispersing aid (ethyl alcohol), water, stabilizing agents, colorant and perfume.

The silicone compositions (Samples 1-11) and the Comparative Samples (CS1-CS4) were added to the Dawn® detergent to provide an antifoam, component (I), addition level of 0.1 wt% by hand stirring in a vial. The vials containing the antifoam droplets dispersed in the detergent were then observed visibly and microscopically for coalescence C, aggregation A and phase P stability initially, after 24 hours and after 14 days. The results are given in Table IV below. The phase stability results are given as (+), (0) and (-) values, wherein (+) indicates a uniform dispersion without any visible phase separation, i.e., a positive result against phase instability; (0) indicates a dispersion with some phase separation where the majority of the sample is still evenly dispersed; and (-) indicates a dispersion of antifoam droplets that is mostly or completely phase separated. The coalescence and aggregation stability results are given in Table IV as (+) which indicated no instability or (-) which indicated the antifoam droplets were unstable against coalescence or aggregation. If the dispersion had phase separated, it was inverted several times to redisperse the sample enough to more clearly observe the coalescence or aggregation state of the antifoam particles.

**TABLE IV**

| Sample | Stability in Dawn® Detergent | | | | | | | | |
|---|---|---|---|---|---|---|---|---|---|
| | Initial | | | 24 hours | | | 14 days | | |
| | P | C | A | P | C | A | P | C | A |
| 1 | + | + | + | + | + | + | - | + | + |
| 2 | + | + | + | + | + | + | 0 | + | + |
| CS1 | + | - | - | - | - | - | - | - | - |
| 3 | + | + | + | + | + | + | 0 | + | + |
| 4 | + | + | + | + | + | + | 0 | + | + |
| CS2 | 0 | - | - | - | - | - | - | - | - |
| 5 | + | + | + | 0 | + | + | - | + | - |
| 6 | + | + | + | 0 | + | + | 0 | + | - |
| 7 | + | + | + | 0 | + | + | - | + | - |
| 10 | + | + | + | + | + | + | - | + | + |
| 11 | + | + | + | + | + | + | - | + | + |
| CS3 | + | - | - | 0 | - | - | - | - | - |
| 8 | + | + | + | + | + | + | + | + | + |
| 9 | + | + | + | + | + | + | + | + | - |
| CS4 | 0 | - | - | - | - | - | - | - | - |

### Example 5

Samples 1 to 11 and the Comparative Samples CS1, CS2, CS3 and CS4 were also tested in the same manner as in Example 4 for stability in a concentrated surfactant medium, except that a different medium was used. The medium used was a textile scour. This type of detergent usually includes nonionic surfactants, cationic surfactants, amphoteric surfactants or a mixture thereof. The specific scour used in this example contained 15% water, an ethoxylated alcohol and an anionic surfactant. The results are shown in Table V.

**TABLE V**

| Sample | Stability in a Textile Scour | | | | | | | | |
|---|---|---|---|---|---|---|---|---|---|
| | Initial | | | 24 hours | | | 14 days | | |
| | P | C | A | P | C | A | P | C | A |
| 1 | + | + | + | + | + | + | 0 | + | + |
| 2 | + | + | + | + | + | + | 0 | + | + |
| CS1 | + | - | - | - | - | - | - | - | - |
| 3 | + | + | + | + | + | + | - | + | + |
| 4 | + | + | + | + | + | + | - | + | + |
| CS2 | 0 | - | - | - | - | - | - | - | - |
| 5 | + | + | + | 0 | + | + | - | + | - |
| 6 | + | + | + | - | + | + | - | + | - |
| 7 | + | + | + | - | + | + | - | + | + |
| 10 | + | + | + | + | + | + | - | + | + |
| 11 | + | + | + | + | + | + | - | + | + |
| CS3 | 0 | - | - | - | - | - | - | - | - |
| 8 | + | + | + | + | + | + | 0 | + | + |
| 9 | + | + | + | + | + | + | 0 | + | + |
| CS4 | 0 | - | - | - | - | - | - | - | - |

### Example 6

To further illustrate the scope of the invention, the following samples 12 to 21 were made by mixing together, with stirring, components (I) and (III) then adding component (II) with continued mixing. The types and amounts of each component for each sample are listed in Table VI. Visibly the samples below were all stable against phase separation for at least several months.

**Table VI**

| Sample | Component I | | Component II | | Component III | |
|---|---|---|---|---|---|---|
| | Type | Amount | Type | Amount | Type | Amount |
| 12 | SA1 | 4.5 | PS3 | 0.8 | CP6 | 44.8 |
| | | | | | WATER | 49.8 |
| 13 | SA1 | 42.5 | PS3 | 7.5 | CP5 | 50 |
| 14 | SA1 | 12.7 | PS3 | 2.3 | CP5 | 85 |
| 15 | SA2 | 12.7 | PS1 | 2.4 | CP2 | 84.9 |
| 16 | SA2 | 12.7 | PS1 | 2.3 | CP6 | 85 |
| 17 | SA2 | 12.7 | PS3 | 2.5 | CP5 | 84.7 |
| 18 | SA2 | 46.6 | PS1 | 3.4 | CP6 | 50 |
| 19 | SA3 | 13.5 | PS3 | 2.4 | CP3 | 84.1 |
| 20 | SA4 | 29 | PS7 | 1.3 | CP4 | 69.7 |
| 21 | SA4 | 19.1 | PS8 | 1.5 | CP1 | 79.4 |

### Example 7

Samples 12 to 21 were tested in the same manner as in Example 2 except that the amount of the silicone composition that was added to the 1 wt% solution of Triton™ X-100 was adjusted according to the amount of component (I) in each sample to give a dilution of 5000 ppm of component (I). The second dilution was again 1 g of this previous dilution added to 99 g of a 1 wt % solution of Triton™ X-100 in a 236.6 ml (8 oz) square bottle to make a foaming composition with a total of 50 ppm of component (I). The test results are shown in Table VII. The control is also the same as in Example 2.

**Table VII**

| Sample | Shake Test Times | | | | |
|---|---|---|---|---|---|
| | 10 sec | 40 sec | 60 sec | 120 sec | 600 sec |
| 12 | 5 | 13 | 26 | 63 | 115 |
| 13 | Would not disperse -too viscous | | | | |
| 14 | 15mm | 20mm | 25mm | 30 | 35 |
| 15 | 5 | 8 | 16 | 39 | 106 |
| 16 | 12 | 18 | 32 | 63 | 105 |
| 17 | 8 | 15 | 25 | 45 | 100 |
| 18 | 7 | 11 | 16 | 44 | 94 |
| 19 | 8 | 22 | 32 | 53 | 85 |
| 20 | 63 | 48 | 44 | 50 | 53 |
| 21 | 8 | 12 | 12 | 14 | 24 |
| Control | 35mm | 55mm | 55mm | 60mm | 65mm |

### Example 8

Samples 12 to 17, 20 and 21 were tested in the same manner as in Example 3 except that the amount of the emulsion that was added to the 2 wt% surfactant solution of a 50:50 linear alkylbenzene sulfonate and Neodol™ 23-9 was adjusted according to the amount of component (I) in each sample to give a dilution of 5000 ppm of component (I). The second dilution was again 2 g of this previous dilution added to 200 ml of the same surfactant solution to make a foaming composition with a total of 50 ppm of component (I). The test results are shown in Table VIII. The control is also the same as in Example 3.

**Table VIII**

| Sample | Blender Test Times | | | |
|---|---|---|---|---|
| | 30 sec Blend | | 60 sec Blend | |
| | H=initial | h=5 min | H=initial | h=5 min |
| 12 | 82 | 66 | 89 | 78 |
| 13 | Would not disperse - too viscous | | | |
| 14 | 79 | 74 | 91 | 83 |
| 15 | 74 | 22 | 81 | 68 |
| 16 | 88 | 67 | 95 | 87 |
| 17 | 74 | 60 | 84 | 75 |
| 20 | 77 | 26 | 84 | 40 |
| 21 | 78 | 50 | 82 | 72 |
| Control | 114 | 106 | 120 | 109 |

## Claims

1. A silicone composition comprising
(I) a linear silicone antifoam agent;
(II) a partially hydrophobic particulate stabilizing aid having a Methanol Wettability of at least 20 percent; and
(III) a nonaqueous liquid continuous phase selected from the group consisting of ethylene glycol, propylene glycol, polypropylene glycol, polyethylene glycol, copolymers of ethylene and propylene glycols, condensates of polypropylene glycol with polyols, condensates of polyethylene glycol with polyols and condensates of copolymers of ethylene and propylene glycols with polyols.

2. A composition according to claim 1 wherein (I) is a siloxane comprising units having the formula: 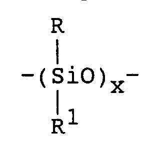 wherein R and R¹ are independently selected from the group consisting of alkyl groups, aryl groups and mixtures of alkyl and aryl groups and x has a value ranging from 20 to 2,000.

3. A composition according to claim 1 wherein (I) is a composition comprising:
(a) a siloxane comprising units having the formula: 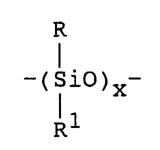 wherein R and R¹ are independently selected from the group consisting of alkyl groups, aryl groups and mixtures of alkyl and aryl groups and x has a value ranging from 20 to 2,000; and
(b) silica.

4. A composition according to claims 1, 2 or 3 wherein (I) is selected from the group consisting of dimethylpolysiloxanes, diethylpolysiloxanes, dipropylpolysiloxanes, dibutylpolysiloxanes, methylethylpolysiloxanes and phenylmethylpolysiloxanes.

5. A composition according to claim 3 wherein the silica is hydrophobic silica.

6. A composition according to claim 1 wherein (II) is a partially hydrophobic silica having a Methanol Wettability of from 30 to 80 percent.

7. A composition according to claim 1 wherein the composition further comprises water.

8. A composition according to claim 1 wherein the composition further comprises at least one surfactant.

9. A composition according to claim 8 wherein the surfactant is a nonionic silicone surfactant which is selected from the group consisting of:
(a) a trimethylsilyl endcapped polysilicate which has been condensed with a polyalkylene glycol;
(b) a trimethylsilyl endcapped polysilicate which has been condensed with a diester; and
(c) a copolymer of polymethylsiloxane and polyalkylene oxide.

10. A composition according to claim 8 wherein the surfactant is selected from the group consisting of anionic surfactants, cationic surfactants, amphoteric surfactants and combinations thereof.

11. A composition according to claim 10 wherein the anionic surfactant is selected from the group consisting of salts of alkylsulfates, salts of alkylarylsulfates, salts of alkyl ether sulfates, salts of alkylaryl ether sulfates and salts of alkylaryl sulfonates.

12. A composition according to claim 10 wherein the nonionic surfactant is selected from the group consisting of alcohol ethoxylates, alkylphenol ethoxylates, glyceryl esters, polyoxyethylene esters, anhydrosorbitol esters, natural fats, oils, waxes, ethoxylated and glycol esters of fatty acids, diethanolamine condensates, monoalkanolamine condensates and polyoxyethylene fatty acid amides.

13. A composition according to claim 11 wherein the amphoteric surfactant is selected from the group consisting of N,N-dimethyl-N-alkyl-N-carboxymethylammonium betaines, N,N-dialkylaminoalkylene carboxylates, N,N,N-trialkyl-N-sulfoalkyleneammonium betaines, N,N-dialkyl-N,N-bispolyoxyethyleneammonium sulfate betaines and 2-alkyl-1-carboxymethyl-1-hydroxyethylimidazolinium betaines.

14. A composition according to claim 8 wherein the composition further comprises an ingredient selected from the group consisting of fatty acid soaps, builder-buffers, sodium tripolyphosphate, organic amine neutralizing agents, solvents, hydrotropes, enzymes, enzyme stabilizers, soil suspending agents, optical brighteners, perfumes, dyes, opacifiers, fragrances and combinations thereof.

15. A process of controlling foam which includes the addition of a foam control composition to a concentrated surfactant medium, characterized by the use of the composition of claim 1 as the foam control composition.
